# EUROPEAN PATENT SPECIFICATION

(11) **EP 2 495 685 B1**
(45) Date of publication and mention of the grant of the patent: **25.03.2015**
(21) Application number: 12157601.1
(22) Date of filing: 29.02.2012
(51) Int. Cl.: G06K 7/10

(54) **Imager reader with hand gesture interface**
Bildlesegerät mit Handgestenschnittstelle
Lecteur d'imagerie avec interface de gestes manuels

(30) Priority: 03.03.2011 US 201113039920
(43) Date of publication of application: 05.09.2012
(73) Proprietor: Hand Held Products, Inc., Skaneateles Falls, New York 13153 (US)
(72) Inventor: Wang, Ynjiun P., Morristown, NJ New Jersey 07962-2245 (US)
(74) Representative: Buckley, Guy Julian

(56) References cited:
- US-A- 4 766 299
- US-A1- 2011 019 162

## Description

### CROSS REFERENCE TO RELATED APPLICATIONS

### Field of the Invention

This disclosure relates generally to imager-based indicia reading terminals and, more specifically, to embodiments of indicia reading terminals that are configured to execute changes in modes of operation using hand gestures.

### Background of the Invention

The use of optical indicia, such as barcode symbols, for product and article identification is well known in the art. Presently, various types of indicia reading terminals have been developed, such as hand-held barcode scanners, hands-free scanners, bioptic in-counter scanners, and mobile computers such as personal digital assistants (PDAs). One common type of scan engine found in hand-held and retail scanners is the laser-based scan engine, which uses a focused laser beam to sequentially scan the bars and spaces of a barcode symbol pattern to be read. The majority of laser scanners in use today, particular in retail environments, employ lenses and moving (e.g., rotating or oscillating) mirrors and/or other optical elements in order to focus and scan laser beams across barcode symbols during code symbol reading operations.

Another common type of indicia reading terminal is the digital imager, which includes linear imagers and area imagers. Digital imagers typically utilize light emitting diodes (LEDs) and a lens to focus the image of the barcode onto a multiple pixel image sensor assembly, which often is a charge-coupled device (CCD) that converts light signals into electric signals. The LEDs simultaneously illuminate all of the bars and spaces of a barcode symbol with light of a specific wavelength in order to capture an image for recognition and decoding purposes.

Digital imagers have the capability to change modes of operation. For example, an imager may be configured to scan a barcode, take a picture, or engage in optical character recognition (OCR). Within the barcode scanning mode, the imager may be configured for presentation mode, trigger mode, or inventory mode, for example. In presentation mode, the imager typically remains stationary in a stand and a product bearing a barcode is swiped by the scanner. In trigger mode, the scanner is typically grasped by hand and directed to the barcode. Many trigger modes may be selected, such as single try, multi-try, and continuous. In inventory mode, a barcode is read and stored in non-volatile memory and not transferred to the host until commanded by the user. Such configurations may be required to accommodate different types of decodable indicia, packages, and other items.

One current method to configure the imager for each of the different modes of operation is to scan a configuration barcode from the Operating Manual or Configuration Guide. The Manual or Guide contains instructions to enter a configuration mode, then scan a printed barcode in the Manual, which subsequently changes the configuration of the terminal. One drawback to this approach is that this method often requires that the end user have available the relevant programming barcodes. The end user must search the manual to find the programming barcode for the desired configuration, which wastes time, may result in erroneous entry, and could lead to customer dissatisfaction.

Another method to configure the imager for a different mode of operation is to connect it to a companion device such as a computer or register, using a wired interface such as a RS-232 or USB cord. Often the imager and the computer communicate via a configuration or set-up tool, which requires the end user to not only have access to the companion device, but also to operate simultaneously the terminal and the companion device to implement the desired configuration for the terminal.

In those circumstances where the end user wishes to change the configuration of the imager for a short duration or one-time use, the current reconfiguration methods are cumbersome and time-consuming.

### Summary of the Invention

Accordingly, there is a need for an imager that can quickly switch its mode of operation without complicated steps or additional hardware. In ones aspect of the invention, provided herein is a system for decoding an encoded symbol character associated with a product. The system includes an imager-based indicia reading terminal comprising a housing and a two-dimensional image sensor array and an imaging lens for focusing an image on the two-dimensional image sensor array. The terminal is adapted to read an encoded symbol character, and further adapted to image a hand gesture. The terminal includes a digital link to transmit the image of the hand gesture. The system further includes a memory coupled to the indicia reading terminal via a digital connection. The memory includes a hand gesture attribute library to associate predefined hand gestures with a terminal mode of operation. The system further includes a central processing unit connected to the digital link to receive the image of the hand gesture, correlate the image with the predefined hand gestures in the hand gesture attribute library, and execute the associated terminal mode of operation.

In another aspect of the invention, provided herein is a method for changing the mode of operation for an indicia reading terminal. The method includes the step of providing an imager-based terminal having a housing and a two-dimensional image sensor array and an imaging lens for focusing an image on the two-dimensional image sensor array. The two-dimensional image sensor array has a plurality of pixels formed in a plurality of rows and columns of pixels. The method further includes the step of providing a memory coupled to the terminal. The memory stores a hand gesture attribute library comprising a plurality of hand gesture attribute images. Each of the images are associated with a mode of operation for the terminal. The method further includes the steps of capturing an image with the imager-based terminal, accessing the hand gesture attribute library, and comparing the captured image to the stored hand gesture attribute images. If the captured image correlates with one of the stored hand gesture attribute images, the mode of operation associated with the hand gesture attribute image is executed.

### Brief Description of the Drawings

The features described herein can be better understood with reference to the drawings described below. The drawings are not necessarily to scale, emphasis instead generally being placed upon illustrating the principles of the invention. In the drawings, like numerals are used to indicate like parts throughout the various views.
FIG. 1 schematically illustrates an imaging apparatus in accordance with the present invention;
FIG. 2 schematically illustrates another embodiment of an imaging apparatus in accordance with the present invention;
FIG. 3 is a block schematic diagram of the imaging apparatus of FIG. 1 or FIG. 2;
FIG. 4 schematically illustrates the imaging apparatus of FIG. 2 according to another embodiment of the invention;
FIG. 5 schematically illustrates the imaging apparatus of FIG. 2 according to yet another embodiment of the invention; and
FIG. 6 is a block diagram of a wireless transceiver according to an embodiment of the present invention.

### Detailed Description of the Invention

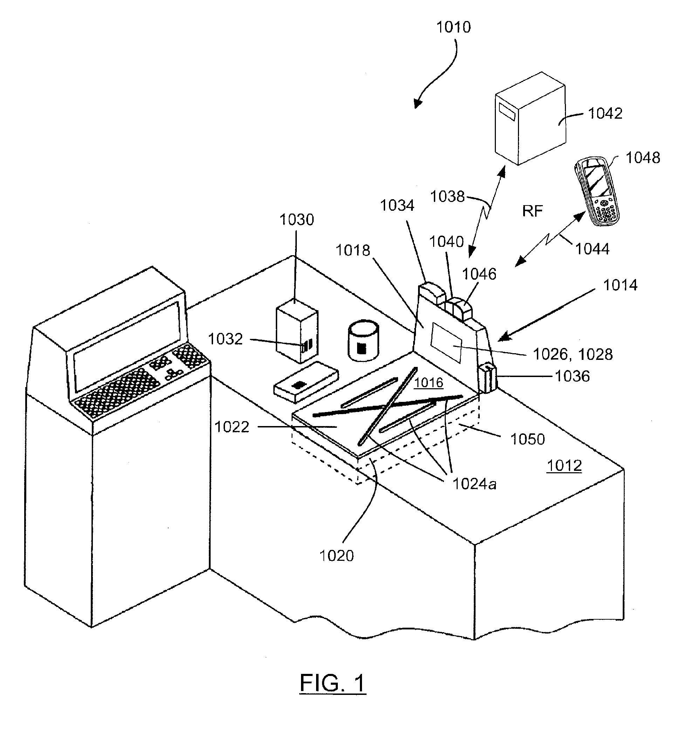

FIG. 1 illustrates a point-of-sale workstation 1010 used by retailers to process transactions involving the purchase of products bearing an encoded symbol character, typically a UPC symbol. The workstation 1010 includes a horizontal countertop 1012 for placement of products to be scanned. A bioptic scanner 1014 mounted within the countertop 1012 includes a first housing portion 1016 and a second housing portion 1018 which projects from one end of the first housing portion in a substantially orthogonal manner. When the bioptic scanner 1014 is installed within the countertop surface, the first housing portion 1016 is oriented horizontally, whereas the second housing portion 1018 is oriented vertically with respect to the point-of-sale (POS) station. Thus, as referred to herein, the terms first housing portion' and 'horizontally-disposed housing portion' may be used interchangeably but refer to the same structure. Likewise, the terms 'second housing portion' and 'vertically-disposed housing portion' may be used interchangeably but refer to the same structure

In one embodiment, first housing portion 1016 comprises a laser-based indicia scanning terminal and the second housing portion 1018 comprises an imager-based terminal. The countertop 1012 includes an optically transparent (*e.g.*, glass) horizontal-scanning window 1020 mounted flush with the checkout counter, covered by an imaging window protection plate 1022 which is provided with a pattern of apertures 1024*a*. These apertures 1024 permit the projection of a plurality of vertical illumination planes from a first scan source located beneath the horizontal-scanning window 1020.

The second housing portion 1018 of the bioptic scanner 1014 further includes a vertical-scanning window 1026 behind which an imager-based indicia reading terminal 1028 is housed. That is, in contrast to the laser-based terminal, the imager based terminal comprises a multiple pixel image sensor assembly, such as a CCD scanner. In general, an image sensor array simultaneously illuminates all of the indicia (*e.g.*, bars and spaces of a bar code symbol) with light of a specific wavelength in order to capture an image for recognition and decoding purposes. Such scanners are commonly known as CCD scanners because they use CCD image detectors to detect images of the bar code symbols being read.

A product 1030 having a encoded symbol character 1032 may be scanned by the bioptic scanner 1014. If the encoded symbol character 1032 is located on the bottom of the product 1030, one or more of the scan lines projected through the horizontal-scanning window 1020 will traverse the symbol for decoding. If the encoded symbol character 1032 is located on the side of the product, then an image of the character 1032 will be captured by the imager-based indicia reading terminal 1028 and sent for decoding.

As used herein, "encoded symbol character' is intended to denote a representation of a unit of information in a message, such as the representation in a barcode symbology of a single alphanumeric character. One or more encoded symbol characters can be used to convey information, such as the identification of the source and the model of a product, for example in a UPC barcode that comprises twelve encoded symbol characters representing numerical digits. Also, an encoded symbol character may be a non-alphanumeric character that has an agreed upon conventional meaning, such as the elements comprising bars and spaces that are used to denote the start, the end, and the center of a UPC barcode. The bars and spaces used to encode a character as an encoded symbol are referred to generally as "elements." For example an encoded character in a UPC symbol consists of four elements, two bars and two spaces. Similarly, encoded symbol characters can be defined for other barcode symbologies, such as other one-dimensional ('1-D) barcode systems including Code 39 and Code 128, or for stacked two-dimensional ('2-D) barcode systems including PDF417.

The bioptic scanner configuration just described is exemplary, and is not limited to a construction having horizontal and vertical scan windows. A bioptic scanner can include a single scan window, but the scan window can have two (or more) scan sources. Although in some constructions the scan sources can be similar, in embodiments of the invention disclosed herein at least one of the scan sources is an imager-based terminal. For example, in addition to the imager-based terminal (*e.g.*, multiple pixel image sensor array), alternate scan sources can include the previously noted laser-based terminal, a radio frequency identification device (RFID), or a weight scale. A second imager-based terminal can be in the horizontal plane. Or, the imager-based terminal can be in the horizontal plane and a laser-based terminal can be in the vertical plane. The image array sensor may be distinguished by the operating software and include 1-D imagers, 2-D imagers, optical character recognition readers, pattern recognition devices, and color recognition devices, for example.

In some constructions, the workstation 1010 may further include a radio frequency identification (RFID) reader 1034; a credit card reader 1036; a wide-area wireless (WIFI) interface 1038 including RF transceiver and antenna 1040 for connecting to the TCP/IP layer of the Internet as well as one or more storing and processing relational database management system (RDBMS) server 1042; a Bluetooth 2-way communication interface 1044 including RF transceivers and antenna 1046 for connecting to Bluetooth-enabled hand-held scanners, imagers, PDAs, portable computers and the like 1048, for control, management, application and diagnostic purposes. The workstation 1010 may further include an electronic weight scale module 1050 employing one or more load cells positioned centrally below the system's structurally rigid platform for bearing and measuring substantially all of the weight of objects positioned on the horizontal-scanning window 1020 or window protection plate 1022, and generating electronic data representative of measured weight of such objects.

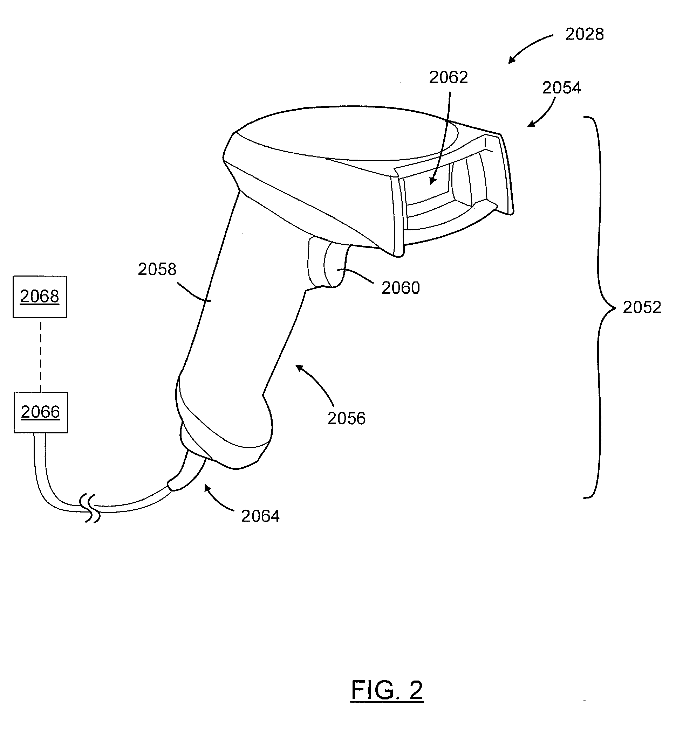

Other embodiments of the present invention may include a hand-held scanner comprising an imager-based scan terminal. For example, referring to FIG. 2, an imager-based indicia reading terminal 2028 has a housing with a form factor 2052 comprising a head portion 2054 and a handle portion 2056, which is configured with a hand grip 2058 and a trigger 2060. The trigger 2060 may be used to make active signals for activating frame readout and/or certain decoding processes. An imaging module 2062 is disposed in the head portion 2054. The imager-based indicia reading terminal 2028 is also configured with a connectivity device 2064, illustrated in the present example as a wired connection 2066 coupled to a companion device 2068 such as might be found in a POS application, e.g., wherein the wired device is coupled to a register and/or peripheral data capture devices. Other configurations of the connectivity device 2064, however, may utilize wireless communication technology and/or contact-type features that do not require wires and/or the wired connection 2066. In certain applications of the imager-based indicia reading terminal 2028, for example, the companion device 2068 may be a docking station with corresponding mating contacts and/or connectors that are useful to exchange such things as power and data, including image data captured by the imaging module 2062.

Although not incorporated in the illustrated embodiments, the imager-based indicia reading terminal 2028 can also include a number of peripheral devices such as a display for displaying such information as image frames captured with use of an image sensor assembly, a keyboard, and a pointing device.

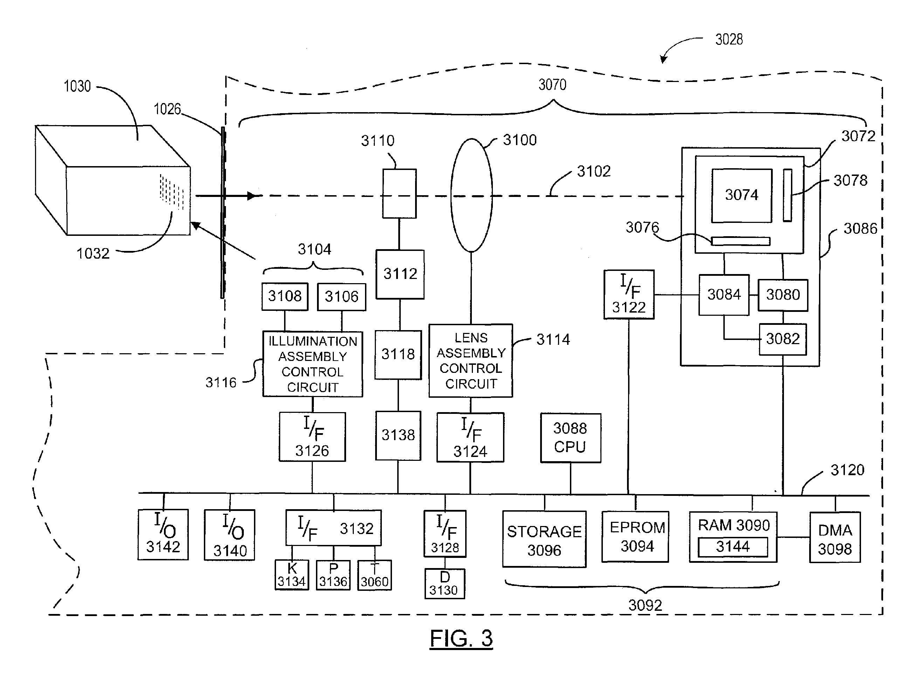

Referring to FIG. 3, there is shown a block diagram of an imager-based indicia reading terminal 3028 such as that disposed in the second housing portion 1018 of the bioptic scanner 1014 of FIG. 1, or in the hand-held device illustrated in FIG. 2. The terminal 3028 comprises a multiple pixel image sensor assembly 3070, or imaging module, such as a CCD scanner. As will be explained more fully below, FIG. 3 shows the basic structures that together comprise the general form of an image sensor array that is suitable for use, and is generic to optical readers that use 1D image sensors and to optical readers that use 2D image sensors.

The image sensor assembly 3070 can include an image sensor 3072 comprising a multiple pixel image sensor array 3074 having pixels arranged in rows and columns of pixels, column circuitry 3076, and row circuitry 3078. Associated with the image sensor 3072 can be amplifier circuitry 3080, and an analog-to-digital (A/D) converter 3082 which converts image information in the form of analog signals read out of multiple pixel image sensor array 3074 into image information in the form of digital signals. Image sensor 3072 can also have an associated timing and control circuit 3084 for use in controlling, e.g., the exposure period of image sensor 3072, and/or gain applied to the amplifier 3080. The noted circuit components 3072, 3080, 3082, and 3084 can be packaged into a common image sensor integrated circuit 3086. In one example, image sensor integrated circuit 3086 can be provided by an MT10V022 image sensor integrated circuit available from Micron Technology, Inc. In another example, image sensor integrated circuit 3086 can incorporate a Bayer pattern filter. In such an embodiment, prior to subjecting a frame to further processing, processor 3088 can interpolate pixel values intermediate of green pixel values for development of a monochrome frame of image data. In other embodiments, red, and/or blue pixel values can be utilized for the image data.

In the course of operation of the image sensor assembly 3070, image signals can be read out of image sensor 3072, converted and stored into one or more memories such as RAM 3090. A memory 3092 of image sensor assembly 3070 can include RAM 3090, a nonvolatile memory such as EPROM 3094, and a storage memory device 3096 such as may be provided by a flash memory or a hard drive memory. In one embodiment, image sensor assembly 3070 can include processor 3088 (or CPU) which can be adapted to read out image data stored in memory 3092 and subject such image data to various image processing algorithms. Image sensor assembly 3070 can include a direct memory access unit (DMA) 3098 for routing image information read out from image sensor 3072 that has been subject to conversion to RAM 3090. In another embodiment, image sensor assembly 3070 can employ a system bus providing for bus arbitration mechanism (e.g., a PCI bus) thus eliminating the need for a central DMA controller. A skilled artisan would appreciate that other embodiments of the system bus architecture and/or direct memory access components providing for efficient data transfer between the image sensor 3072 and RAM 3090 are within the scope of the invention.

Referring to further aspects of image sensor assembly 3070, the sensor assembly can include an imaging lens assembly 3100 for focusing an image of the encoded symbol character 3032 onto image sensor 3072. Imaging light rays can be transmitted about an optical axis 3102. Image sensor assembly 3070 can also include an illumination assembly 3104 or excitation illumination module that comprises one or more of an illumination pattern light source bank 3106 for generating an illumination pattern substantially corresponding to the field of view of image sensor assembly 3070, and an aiming pattern light source bank 3108 for generating an aiming pattern. In use, the product 3030 can be presented by an operator to the image sensor assembly 3070 in such manner that the aiming pattern is projected on the encoded symbol character 3032. In the example of Fig. 3, the encoded symbol character 3032 is provided by a 1D barcode symbol. Encoded symbol characters could also be provided by 2D barcode symbols or optical character recognition (OCR) characters.

The image sensor assembly 3070 can further include a filter module 3110 that comprises one or more optical filters, as well as in some embodiments an actuator assembly 3112 that is coupled generally to the filter module, such as to the optical filters. The filter module 3110 can be located on either side of the imaging lens assembly 3100. Likewise, one ore more of the optical filters within the filter module 3110 can be disposed on one or more surfaces of the imaging lens assembly 3100 and/or the image sensor 3072.

Each of illumination pattern light source bank 3106 and aiming pattern light source bank 3108 can include one or more light sources. Lens assembly 3100 can be controlled with use of lens assembly control circuit 3114 and the illumination assembly 3104 comprising illumination pattern light source bank 3106 and aiming pattern light source bank 3108 can be controlled with use of illumination assembly control circuit 3116. Filter module 3110 can be controlled with use of a filter module control circuit 3118, which can be coupled to the actuator assembly 3112. Lens assembly control circuit 3114 can send signals to lens assembly 3100, e.g., for changing a focal length and/or a best focus distance of lens assembly 3100. Illumination assembly control circuit 3116 can send signals to illumination pattern light source bank 3106, e.g., for changing a level of illumination output.

Image sensor assembly 3070 can include various interface circuits for coupling several of the peripheral devices to system address/data bus (system bus) bus 3120, for communication with processor 3088 also coupled to system bus 3120. Image sensor assembly 3070 can include interface circuit 3122 for coupling image sensor timing and control circuit 3084 to system bus 3120, interface circuit 3124 for coupling the lens assembly control circuit 3114 to system bus 3120, interface circuit 3126 for coupling the illumination assembly control circuit 3116 to system bus 3120, interface circuit 3128 for coupling a display 3130 to system bus 3120, interface circuit 3132 for coupling a keyboard 3134, a pointing device 3136, and trigger 3060 to system bus 3120, and interface circuit 3138 for coupling the filter module control circuit 3118 to system bus 3120.

In a further aspect, image sensor assembly 3070 can include one or more I/O interfaces 3140, 3142 for providing communication with external devices (e.g., a cash register server, a store server, an inventory facility server, a image sensor assembly 3070, a local area network base station, a cellular base station). I/O interfaces 3140, 3142 can be interfaces of any combination of known computer interfaces, e.g., Ethernet (IEEE 802.3), USB, IEEE 802.11, Bluetooth, CDMA, and GSM, and may couple with processors, such as interface microcontrollers, and memories to carry out some or all the functions described herein.

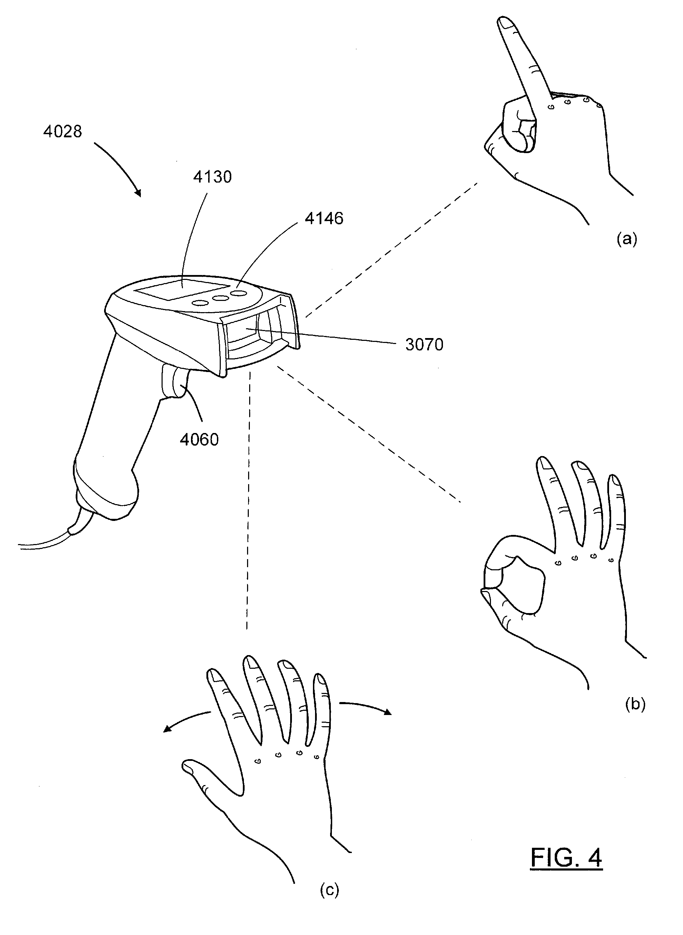

Referring now to FIGS. 3 and 4, in one embodiment an imager-based indicia reading terminal 4028 not only reads and decodes a barcode, but also monitors a user's behavior in the form of hand gestures to execute a specific mode of operation for the terminal. The memory 3092 may include a hand gesture attribute library 3144 to associate predefined hand gestures with a terminal mode of operation. In one example, the hand gesture attribute library 3144 is stored in RAM 3090, and includes a group of images depicting a variety of hand gestures. Each depiction of a hand gesture is paired with a mode of operation for the terminal. The pairing may be in a lookup table, for example. The processor 3088 may be adapted to compare the captured image from the image sensor 3072 with the group of depictions or images stored in the hand gesture attribute library 3144. Upon finding a match, the processor 3088 looks up the associated mode of operation and switches to or executes the new mode. The new mode of operation may be executed for a predetermined time period, a user-defined time period, or until a new mode of operation is commanded.

In one embodiment, the new mode of operation is executed for a single frame capture, and the terminal then reverts to its original setting. For example, the default mode of operation for the imager-based indicia reading terminal 4028 illustrated in FIG. 4 may be out-of-stand, multi-try trigger mode. In this configuration, the imager 4028 will capture and attempt to decode barcode images only when the trigger 4060 is depressed. Otherwise, the imager 4028 is in a continuous scan mode comparing the images on the image sensor array 3074 to the images in the hand gesture attribute library 3144. In one example, the user gestures "number one" as shown in FIG. 4(a). Using pattern recognition software or other image processing algorithms, the processor 3088 finds a match in the library 3144, looks up the associated mode of operation, and executes the new mode. In one example the new mode could be a digital frame capture, wherein the terminal 4028 takes a picture when the trigger 3060 is depressed. Other modes of operation could be associated with the user gesturing "number two", "humber three", or "number four", for example. For instance, the user could gesture "number two" to revert back to the original mode of operation.

In another embodiment, the indicia reading terminal 4028 may include one or more feedback indicators to indicate the terminal is prepared to switch modes. The terminal 4028 may also require confirmation from the user prior to continuing. The terminal 4028 may include a display 4130 that visually indicates a match has been achieved and shows the new mode of operation. The terminal 4028 may require a confirmation before proceeding, such as the "okay" gesture illustrated in FIG. 4(b). Alternately, the terminal may require the user to press the trigger 4060 to continue, or some other affirmative action. If the terminal 4028 does not detect an affirmative action in a predetermined period of time, such as two seconds, no action is taken. If the terminal 4028 erroneously detects a hand gesture and the user does not wish to switch modes of operation, a hand gesture indicating denial may be initiated, such as the back-and-forth "no" gesture shown in FIG. 4(c). In one example, the feedback indicator is an audible feedback indicator, such as a beep, tone, or synthesized voice indicating the command has been executed.

In another embodiment, visual indicators such as lights may be utilized to indicate the terminal is prepared to switch modes. For example, the indicia reading terminal 4028 may include one or more light emitting diodes (LEDs) 4146. In one example, three different colors are utilized: green, yellow, and red. A yellow LED may indicate the terminal 4028 is attempting to decipher a hand gesture. A green LED may indicate the hand gesture has been accepted. A red LED may indicate the hand gesture has not been deciphered.

The bioptic scanner 1014 illustrated in FIG. 1 may be configured to rapidly and conveniently switch between often-used modes of operation. For example, a user may present the product 1030 in front of the vertical-scanning window 1026 and remain motionless for one second, indicating the user would like to take a picture of the object. In another example, waving the hand left-and-right may indicate to delete a previous barcode entry. In other examples, a predetermined hand gesture can change the mode of operation from barcode scanning to optical character recognition (OCR), RFID mode, weight scale mode, light pen enable/disable, barcode type (*e.g.*, UPC, Code 128), and enable/disable in-store barcode reading.

A wide variety of modes of operation may be configured for the imager-based indicia reading terminal. In one example, the hand gesture attribute library may be programmed at the factory and an included users manual would provide instructions for use. In one example, the library could be coded into EPROM 3094. The hand attribute library could, for example, include sign language to construct an extensive combination of gestures.

In another example, the hand gesture attribute library could be user-programmable. In such an embodiment, any of the ordinary modes of operation provided in the Configuration Guide could be reprogrammed to execute with a user-selected hand gesture. In this manner, any of the modes of operation currently configurable by scanning a barcode or inputting coded text via a companion device could be replaced by a desired hand gesture. The user could enter a programming or learning mode, scan the barcode for the particular mode of operation, then furnish a hand gesture to replace or supplement the barcode. Then, instead of obtaining a Configuration Guide, searching for the correct barcode to change the mode of operation, and scanning the barcode, the user simply uses the hand gesture and the new mode of operation is executed.

The modes of operation that may be configured to execute with a hand gesture for imager-based indicia reading terminals having a hand-held form factor may include, but are not limited to, scanning modes. Examples of scanning modes include presentation mode, multi-try trigger mode, continuous trigger mode, and single-trigger mode. Any of these modes may be separately configured for in-stand and out-of-stand operation. Examples of modes of operation configurable with hand gestures within the presentation mode may include: presentation mode immediately after button release, one second after button release, and five seconds after button release. Also within presentation mode, pass-through settings may be enabled or disabled, or a pass-through timeout may be set to 100 or 300 milliseconds, for example.

The modes of operation that may be configured to execute with a hand gesture for imager-based indicia reading terminals having a hand-held form factor may include, but are not limited to, inventory modes. An inventory mode may be enabled or disabled, for example. When enabled, records scanned from barcodes are stored in internal memory, and a hand gesture may execute a command to transmit all records to a local host computer. Hand gestures could also be utilized to identify quantities of items, for example by gesturing the number one, the number two, and the like.

The image sensor assembly 3070 may be utilized to capture a series of images to detect motion as well as still gestures. For example, the back-and-forth motion depicted in FIG. 4(b) may be deciphered by comparing a sequential series of captured images with a like set in the hand gesture attribute library. In another embodiment, a lack of motion for a predetermined period may indicate a request for a change in the mode of operation. For example, the imager-based indicia reading terminal may be adapted such that when an objects stops in the scan volume for a predetermined time (*e.g.*, 2 seconds), the terminal can switch to a camera mode.

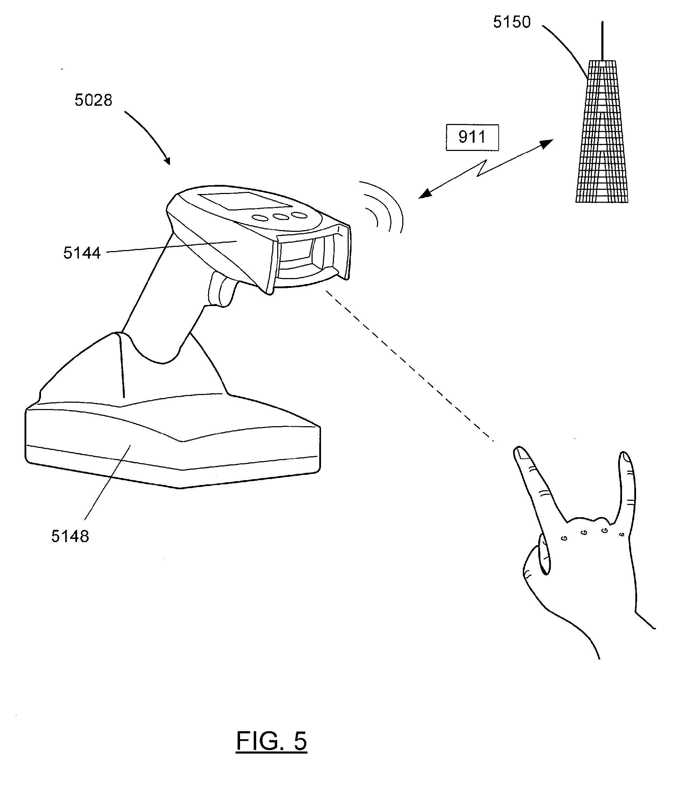

Turning to FIG. 5, an imager-based indicia reading terminal 5028 may be utilized to interpret a hand gesture and send a distress communication to a device in the event of an emergency, such as a store robbery. In one embodiment, the imager-based indicia reading terminal 5028 is a hand-held device, which may be secured in a base 5148 on a store countertop. As described in other embodiments of the invention, the terminal 5028 includes hand gesture attribute library 5144 that includes a distress signal, such as that shown in FIG. 5. The particular hand gesture to denote an emergency may be any convenient image, such as a user-generated image, and is not limited to the illustration. When a user displays the hand gesture to the terminal 5028 and the image correlates with that in the library 5144, the terminal may be adapted to call local police or 911, for example.

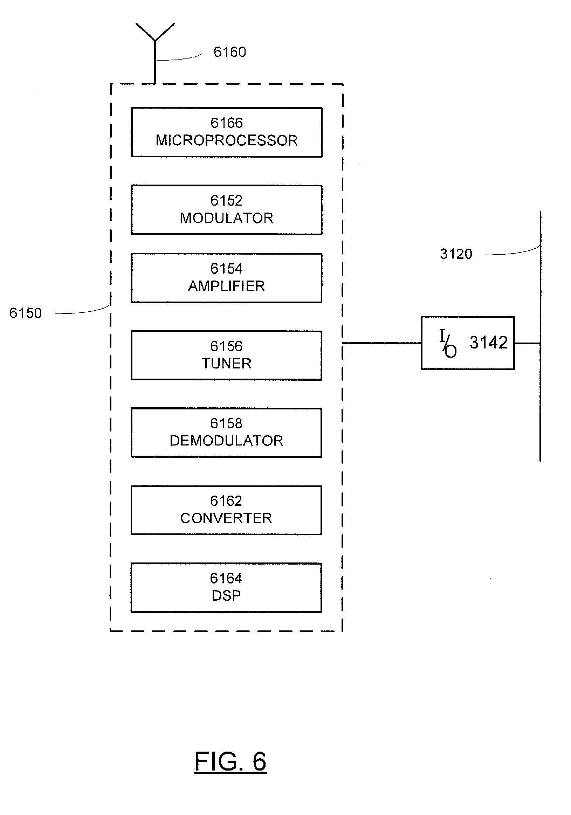

In one embodiment, shown in FIG. 6, the I/O interface 3140 may be coupled to a wireless transceiver 6150. The wireless transceiver includes a variety of components that perform various tasks or functions. For example, the components may include a radio frequency (RF) signal modulator 6152, an RF signal amplifier 6154, an RF signal tuner 6156, and an RF signal demodulator 6158. The RF signal modulator 6152 may include any suitable structure for modulating data onto an outgoing RF signal for transmission. The RF signal amplifier 6154 may include any suitable structure for amplifying RF signals. The RF signal tuner 6156 may include any suitable structure for tuning the wireless transceiver 6150 to a specified RF frequency or frequencies. The RF signal demodulator 6158 may include any suitable structure for demodulating data in an incoming RF signal received by the wireless transceiver 6150. The transmission and reception of RF signals could occur using an internal or external antenna 6160, which represents any suitable structure capable of transmitting and receiving RF or other wireless signals.

The components in the wireless transceiver 6150 may also include analog-to-digital (A/D) and digital-to-analog (D/A) signal converters 6162, a digital signal processor (DSP) 6164, and a microprocessor 6166. The signal converters 6162 include any suitable structure(s) for converting analog signals into digital signals or digital signals into analog signals. The digital signal processor 6164 includes any suitable structure for processing signals, such as signals to be provided to the RF signal modulator 6152 for transmission or signals received by the RF signal demodulator 6158. The microprocessor 6166 includes any suitable structure for controlling the overall operation of the wireless transceiver 6150, such as a microprocessor or microcontroller, and may further be adapted to the system bus 3120 to control the overall operation of the indicia reading terminal.

Turning now back to FIG. 5, in the event of an emergency, the user simply gestures the distress signal to the terminal 5028. Upon correlating the image of the distress signal to that in the library 5144, the terminal 5028 is adapted to execute a mode of operation wherein a distress call is placed through the wireless transceiver via the I/O interface. The call, which may be transmitted in a predetermined frequency, may be received by local police, private security companies, the in-store alarm, or the like 5168. In one embodiment, the terminal 5028 does not execute any audio or visual feedback (*e.g.*, a silent alarm).

Alternately, the terminal 5028 shown in FIG. 5 may be connected via a wired connection to an external device such as modem (not shown) for communication of the distress signal. Other embodiments may include the bioptic scanner illustrated in FIG. 1, so long as the scanner includes an imager-based terminal.

One of the improvements of the present disclosure is that cumbersome steps to switch modes of operation for an imager-based indicia reading terminal are alleviated. Rather than search through an Operation Manual (which may be over 50 pages) to find the correct barcode to switch a mode of operation, or connecting a companion device to the terminal, the user simply performs a hand gesture.

Among the apparatus and methods set forth herein there is set forth herein:
A1. A system for decoding an encoded symbol character associated with a product, the system comprising:
   an imager-based indicia reading terminal comprising a housing and a two-dimensional image sensor array and an imaging lens for focusing an image on the two-dimensional image sensor array, the two-dimensional image sensor array having a plurality of pixels formed in a plurality of rows and columns of pixels, the terminal adapted to read an encoded symbol character and further adapted to image a hand gesture, the terminal having a digital link to transmit the image of the hand gesture;
   one or more memories coupled to the indicia reading terminal via a digital connection, at least one of the memories comprising a hand gesture attribute library to associate predefined hand gestures with a terminal mode of operation; and
   one or more processors connected to the digital link to receive the image of the hand gesture, correlate the image with the predefined hand gestures in the hand gesture attribute library, and execute the associated terminal mode of operation.
A2. The system of A1, wherein the imager-based indicia reading terminal has a hand-held form factor.
A3. The system of A1, wherein the imager-based indicia reading terminal is a bioptic scanner.
A4. The system of A1, wherein the image of the hand gesture indicates a numeral.
A5. The system of A1, wherein the image of the hand gesture comprises an "okay" sign.
A6. The system of A1, wherein the imager-based indicia reading terminal further comprises an input/output interface for providing communication with a device, the communication responsive to the terminal mode of operation.
A7. The system of A6, wherein the image of the hand gesture comprises a distress signal, and the terminal mode of operation comprises sending a distress communication to the device.
A8. The system of A7, wherein the device is a wireless transceiver.
A9. The system of A7, wherein the device is a wired connection.
A10. The system of A1, wherein the image of the hand gesture comprises sign language.
A11. The system of A1, wherein the image of the hand gesture comprises a plurality of images comprising a hand in motion.
A12. The system of A9, wherein the plurality of images comprises a hand in back-and-forth motion.
A13. The system of A1, wherein the image of the hand gesture comprises a plurality of images in still motion for a predetermined time period.
A14. The system of A1, further comprising a visual feedback indicator.
A15. The system of A12, wherein the visual feedback indicator is a light.
A16. The system of A15, wherein the light comprises a plurality of light emitting diodes.
A17. The system of A16, wherein the light emitting diodes comprise the colors green, yellow, and red.
B 1. A method for changing the mode of operation for an indicia reading terminal, the method comprising the steps of:
   providing an imager-based terminal having a housing and a two-dimensional image sensor array and an imaging lens for focusing an image on the two-dimensional image sensor array, the two-dimensional image sensor array having a plurality of pixels formed in a plurality of rows and columns of pixels;
   providing one or more memories coupled to the terminal, at least one of the memories storing a hand gesture attribute library comprising a plurality of hand gesture attribute images, each of the images associated with a mode of operation for the terminal;
   capturing an image with the imager-based terminal;
   accessing the hand gesture attribute library and comparing the captured image to the stored hand gesture attribute images; and
   if the captured image correlates with one of the stored hand gesture attribute images, executing the mode of operation associated with the hand gesture attribute image.
B2. The method of B1, wherein the stored hand gesture attribute image comprises a distress signal, and the mode of operation associated with the distress hand signal is sending a distress communication to a device.
B3. The method of B1, further comprising the step of providing feedback to indicate the terminal is prepared to execute the mode of operation associated with the hand gesture attribute image.
B4. The method of B3, wherein the step of providing feedback comprises visually indicating on a display that a match has been achieved.
B5. The method of B3, wherein the display shows the new mode of operation.
B6. The method of B3, wherein the step of providing feedback comprises illuminating a light.
B7. The method of B3, further comprising the step of requiring a confirmation before executing the mode of operation.
B8. The method of B7, wherein the confirmation is a hand gesture.

While the present invention has been described with reference to a number of specific embodiments, it will be understood that the scope of the invention should be determined only with respect to claims that can be supported by the present specification. Further, while in numerous cases herein wherein systems and apparatuses and methods are described as having a certain number of elements it will be understood that such systems, apparatuses and methods can be practiced with fewer than the mentioned certain number of elements. Also, while a number of particular embodiments have been described, it will be understood that features and aspects that have been described with reference to each particular embodiment can be used with each remaining particularly described embodiment.

## Claims

1. A system for decoding an encoded symbol character associated with a product, the system comprising:
an imager-based indicia reading terminal (3028) comprising a housing and a two-dimensional image sensor array (3074) and an imaging lens (3100) for focusing an image on the two-dimensional image sensor array, the two-dimensional image sensor array having a plurality of pixels formed in a plurality of rows and columns of pixels, the terminal being adapted to read an encoded symbol character and further being adapted to image a hand gesture, the terminal having a digital link (3120) to transmit the image of the hand gesture;
one or more memories (3092) coupled to the indicia reading terminal via a digital connection, at least one of the memories comprising a hand gesture attribute library (3144) to associate predefined hand gestures with a terminal mode of operation; and
one or more processors (3088) connected to the digital link to receive the image of the hand gesture, correlate the image with the predefined hand gestures in the hand gesture attribute library, and execute the associated terminal mode of operation.

2. The system of claim 1, wherein the imager-based indicia reading terminal has a hand-held form factor.

3. The system of claim 1, wherein the imager-based indicia reading terminal is a bioptic scanner.

4. The system of claim 1, wherein the image of the hand gesture indicates a numeral.

5. The system of claim 1, wherein the image of the hand gesture comprises an"okay" sign.

6. The system of claim 1, wherein the imager-based indicia reading terminal further comprises an input/output interface for providing communication with a device, the communication responsive to the terminal mode of operation.

7. The system of claim 6, wherein the image of the hand gesture comprises a distress signal, and the terminal mode of operation comprises sending a distress communication to the device.

8. The system of claim 1, wherein the image of the hand gesture comprises sign language.

9. The system of claim 1, wherein the image of the hand gesture comprises a plurality of images comprising a hand in motion.

10. The system of claim 9, wherein the plurality of images comprises a hand in back-and-forth motion.

11. The system of claim 1, wherein the image of the hand gesture comprises a plurality of images in still motion for a predetermined time period.

12. The system of claim 1, further comprising a visual feedback indicator.

13. A method for changing the mode of operation for an indicia reading terminal, the method comprising the steps of:
providing an imager-based terminal having a housing and a two-dimensional image sensor array and an imaging lens for focusing an image on the two-dimensional image sensor array, the two-dimensional image sensor array having a plurality of pixels formed in a plurality of rows and columns of pixels;
providing one or more memories coupled to the terminal, at least one of the memories storing a hand gesture attribute library comprising a plurality of hand gesture attribute images, each of the images associated with a mode of operation for the terminal;
capturing an image with the imager-based terminal;
accessing the hand gesture attribute library and comparing the captured image to the stored hand gesture attribute images; and
if the captured image correlates with one of the stored hand gesture attribute images, executing the mode of operation associated with the hand gesture attribute image.

14. The method of claim 13, wherein the stored hand gesture attribute image comprises a distress signal, and the mode of operation associated with the distress hand signal is sending a distress communication to a device.

15. The method of claim 13, further comprising the step of providing feedback to indicate the terminal is prepared to execute the mode of operation associated with the hand gesture attribute image.

## Patentansprüche

1. System zum Decodieren eines codierten Symbolzeichens, das einem Produkt zugeordnet ist, wobei das System Folgendes umfasst:
ein abbildungsbasiertes Endgerät zum Lesen von Kennzeichnungen (3028), das ein Gehäuse und eine zweidimensionale Bildsensoranordnung (3074) und eine Abbildungslinse (3100) zum Fokussieren eines Bildes auf die zweidimensionale Bildsensoranordnung enthält, wobei die zweidimensionale Bildsensoranordnung mehrere Pixel besitzt, die in mehreren Reihen und Spalten von Pixeln gebildet sind, wobei das Endgerät ausgelegt ist, ein codiertes Symbolzeichen zu lesen, und ferner ausgelegt ist, eine Handgeste abzubilden, wobei das Endgerät eine digitale Verbindung (3120) besitzt, um das Bild der Handgeste zu senden;
einen oder mehrere Speicher (3092), die an das Endgerät zum Lesen von Kennzeichnungen über eine digitale Verbindung gekoppelt sind, wobei mindestens einer der Speicher eine Handgestenattributbibliothek (3144) umfasst, um vordefinierte Handgesten einem Endgerätbetriebsmodus zuzuordnen; und
einen oder mehrere Prozessoren (3088), die mit der digitalen Verbindung verbunden sind, um das Bild der Handgeste zu empfangen, das Bild mit den vordefinierten Handgesten in der Handgestenattributbibliothek zu korrelieren und den zugeordneten Endgerätbetriebsmodus auszuführen.

2. System nach Anspruch 1, wobei das abbildungsbasierte Endgerät zum Lesen von Kennzeichnungen einen Handformfaktor besitzt.

3. System nach Anspruch 1, wobei das abbildungsbasierte Endgerät zum Lesen von Kennzeichnungen ein bioptischer Scanner ist.

4. System nach Anspruch 1, wobei das Bild der Handgeste eine Zahl angibt.

5. System nach Anspruch 1, wobei das Bild der Handgeste ein "In Ordnung"-Zeichen umfasst.

6. System nach Anspruch 1, wobei das abbildungsbasierte Endgerät zum Lesen von Kennzeichnungen ferner eine Eingabe-/Ausgabeschnittstelle umfasst, um eine Kommunikation mit einer Vorrichtung bereitzustellen, wobei die Kommunikation auf den Endgerätbetriebsmodus reagiert.

7. System nach Anspruch 6, wobei das Bild der Handgeste ein Notlagesignal umfasst und der Endgerätbetriebsmodus umfasst, eine Notlagekommunikation an die Vorrichtung zu senden.

8. System nach Anspruch 1, wobei das Bild der Handgeste Zeichensprache umfasst.

9. System nach Anspruch 1, wobei das Bild der Handgeste mehrere Bilder umfasst, die eine Hand in Bewegung umfassen.

10. System nach Anspruch 9, wobei die mehreren Bilder eine Hand in einer Hin-und-her-Bewegung umfassen.

11. System nach Anspruch 1, wobei das Bild der Handgeste mehrere Bilder in unbewegter Bewegung für eine vorgegebene Zeitperiode umfassen.

12. System nach Anspruch 1, das ferner einen visuellen Rückmeldungsindikator umfasst.

13. Verfahren zum Ändern des Betriebsmodus eines Endgeräts zum Lesen von Kennzeichnungen, wobei das Verfahren die folgenden Schritte umfasst:
Bereitstellen eines abbildungsbasierten Endgeräts mit einem Gehäuse und einer zweidimensionalen Bildsensoranordnung und einer Abbildungslinse zum Fokussieren eines Bildes auf die zweidimensionale Bildsensoranordnung, wobei die zweidimensionale Bildsensoranordnung mehrere Pixel besitzt, die in mehreren Reihen und Spalten von Pixeln gebildet sind;
Bereitstellen eines oder mehrerer Speicher, die an das Endgerät gekoppelt sind, wobei mindestens einer der Speicher eine Handgestenattributbibliothek speichert, die mehrere Handgestenattributbilder umfasst, wobei jedes der Bilder einem Betriebsmodus für das Endgerät zugeordnet ist;
Aufnehmen eines Bildes mit dem abbildungsbasierten Endgerät;
Zugreifen auf die Handgestenattributbibliothek und Vergleichen des aufgenommen Bildes mit den gespeicherten Handgestenattributbildern; und
dann, wenn das aufgenommene Bild mit einem der gespeicherten Handgestenattributbilder korreliert, Ausführen des Betriebsmodus, der dem Handgestenattributbild zugeordnet ist.

14. Verfahren nach Anspruch 13, wobei das gespeicherte Handgestenattributbild ein Notlagesignal umfasst und der Betriebsmodus, der dem Notlagehandsignal zugeordnet ist, darin besteht, eine Notlagekommunikation an eine Vorrichtung zu senden.

15. Verfahren nach Anspruch 13, das ferner den Schritt umfasst, eine Rückmeldung zu liefern, um anzugeben, dass das Endgerät darauf eingestellt ist, den Betriebsmodus auszuführen, der dem Handgestenattributbild zugeordnet ist.

## Revendications

1. Système destiné à décoder un caractère de symbole codé associé à un produit, le système comprenant :
un terminal de lecture de marques de type imageur (3028) comprenant un boîtier et un réseau de capteurs d'image bidimensionnel (3074) et une lentille d'imagerie (3100) destinée à focaliser une image sur le réseau de capteurs d'image bidimensionnel, le réseau de capteurs d'image bidimensionnel comportant une pluralité de pixels formant une pluralité de lignes et de colonnes de pixels, le terminal étant adapté à lire un caractère de symbole codé et étant adapté en outre à imager un geste de la main, le terminal disposant d'une liaison numérique (3120) pour transmettre l'image du geste de la main ;
une ou plusieurs mémoires (3092) couplées au terminal de lecture de marques via une connexion numérique, au moins une des mémoires comprenant une bibliothèque d'attributs de gestes de la main (3144) pour associer des gestes de la main prédéfinis à un mode de fonctionnement du terminal ; et
un ou plusieurs processeurs (3088) connectés à la liaison numérique pour recevoir l'image du geste de la main, corréler l'image avec les gestes de la main prédéfinis dans la bibliothèque d'attributs de gestes de la main et exécuter le mode de fonctionnement associé du terminal.

2. Système selon la revendication 1, dans lequel le terminal de lecture de marques de type imageur possède des dimensions adaptées à la main.

3. Système selon la revendication 1, dans lequel le terminal de lecture de marques de type imageur est un scanner bi-optique.

4. Système selon la revendication 1, dans lequel l'image du geste de la main indique un chiffre.

5. Système selon la revendication 1, dans lequel l'image du geste de la main comprend un signe "ok".

6. Système selon la revendication 1, dans lequel le terminal de lecture de marques de type imageur comprend en outre une interface d'entrée/sortie destinée à assurer une communication avec un dispositif, la communication étant fonction du mode de fonctionnement du terminal.

7. Système selon la revendication 6, dans lequel l'image du geste de la main comprend un signal de détresse, et le mode de fonctionnement du terminal comprend la transmission d'une communication de détresse au dispositif.

8. Système selon la revendication 1, dans lequel l'image du geste de la main comprend le langage des signes.

9. Système selon la revendication 1, dans lequel l'image du geste de la main comprend une pluralité d'images comprenant une main en mouvement.

10. Système selon la revendication 9, dans lequel la pluralité d'images comprend une main en mouvement de va-et-vient.

11. Système selon la revendication 1, dans lequel l'image du geste de la main comprend une pluralité d'images en mouvement arrêté pendant un laps de temps prédéfini.

12. Système selon la revendication 1, comprenant en outre un indicateur de retour d'information visuel.

13. Procédé permettant de changer le mode de fonctionnement d'un terminal de lecture de marques, le procédé comprenant les étapes consistant à :
procurer un terminal de type imageur comprenant un boîtier et un réseau de capteurs d'image bidimensionnel et une lentille d'imagerie destinée à focaliser une image sur le réseau de capteurs d'image bidimensionnel, le réseau de capteurs d'image bidimensionnel comportant une pluralité de pixels formant une pluralité de lignes et de colonnes de pixels ;
procurer une ou plusieurs mémoires couplées au terminal, au moins une des mémoires stockant une bibliothèque d'attributs de gestes de la main comprenant une pluralité d'images d'attributs de gestes de la main, chacune des images étant associée à un mode de fonctionnement du terminal ;
capturer une image du terminal de type imageur ;
accéder à la bibliothèque d'attributs de gestes de la main et comparer l'image capturée aux images d'attributs de gestes de la main stockées ; et
en cas de corrélation de l'image capturée avec l'une des images d'attributs de gestes de la main stockées, exécuter le mode de fonctionnement associé à l'image d'attribut de geste de la main.

14. Procédé selon la revendication 13, dans lequel l'image d'attribut de geste de la main stockée comprend un signal de détresse, et le mode de fonctionnement associé au signal de détresse de la main transmet une communication de détresse à un dispositif.

15. Procédé selon la revendication 13, comprenant en outre l'étape consistant à procurer un retour d'information pour indiquer que le terminal est prêt à exécuter le mode de fonctionnement associé à l'image d'attribut de geste de main.
